# FASCICULE DE BREVET EUROPEEN

(11) **EP 3 218 130 B1**
(45) Date de publication et mention de la délivrance du brevet: **29.05.2019**
(21) Numéro de dépôt: 15807954.1
(22) Date de dépôt: 16.11.2015
(51) Int. Cl.: B22F 3/105, B22F 5/04, B22F 7/06, B23P 6/00, B23K 35/30, B23P 6/04, B23K 35/02, C22C 1/04, C22C 19/05, F01D 5/00, B22F 7/08, B23K 35/36, B23K 35/362, C22C 19/03

(54) **PROCÉDÉ DE RÉPARATION D'UNE PIÈCE DE TURBOMACHINE**
VERFAHREN ZUM REPARIEREN EINES TEILS FÜR EINE TURBOMASCHINE
METHOD FOR REPAIRING A PART FOR A TURBOMACHINE

(30) Priorité: 14.11.2014 FR 1461035
(43) Date de publication de la demande: 20.09.2017
(73) Titulaire: SAFRAN AIRCRAFT ENGINES, 75015 Paris (FR)
(72) Inventeur: MOTTIN, Jean-Baptiste, 77550 Moissy-Cramayel (FR)
(74) Mandataire: Pichat, Thierry
(86) Numéro de dépôt international: PCT/FR2015/053091
(87) Numéro de publication internationale: WO 2016/075423

(56) Documents cités:
- FR-A1- 2 978 070
- US-A- 4 381 944
- US-A1- 2007 084 047

## Description

La présente invention concerne un procédé de réparation, ceci n'excluant pas la fabrication, d'une pièce de turbomachine.

Certaines pièces d'une turbomachine, telles en particulier que des aubes de turbine, sont soumises à des phénomènes d'érosion ou d'usure, provoquant des endommagements importants qu'il faut réparer au-delà d'un certain nombre de cycles.

Ces endommagements peuvent notamment se présenter sous la forme d'un manque de matière. La réparation consiste alors à redonner à la pièce usée ses formes et dimensions d'origine, ou très proches d'elles.

Pour cela, plusieurs techniques sont utilisées dans l'art antérieur, dont la fabrication d'une préforme par frittage d'une poudre de superalliage et d'une poudre de brasure (dont le point de fusion est inférieur à la poudre de superalliage), puis brasage par diffusion de la préforme sur la pièce à réparer (ci-après le terme « métal » comprend les alliages).

On rappelle que le brasage est un procédé qui consiste à assembler par exemple deux pièces métalliques, de matériaux identiques ou différents, par l'intermédiaire d'un métal d'apport dont le point de fusion est nettement inférieur à ceux des matériaux des pièces. La brasure contenue dans le métal d'apport est amené à l'état liquide et les pièces sont chauffées par le métal d'apport, mais restent solides.

Le brasage-diffusion (diffusion brazing ou transient liquid phase bonding) est une opération d'assemblage de deux pièces métalliques analogue au brasage, mais dans laquelle la différence de composition entre le métal d'apport et les pièces à assembler est progressivement résorbée par un traitement thermique de diffusion. Ce traitement conduit à la formation d'une liaison quasi-homogène chimiquement et dont les caractéristiques sont proches de celles des pièces à assembler. Le brasage-diffusion pourrait donc être considéré comme un brasage conventionnel auquel on a adjoint un traitement de diffusion.

Lors de l'assemblage de deux pièces, on utilise un métal d'apport de composition chimique voisine de celle des pièces à assembler, mais ayant grâce à la brasure, une température de fusion plus faible. Au cours du brasage-diffusion, la brasure fond et mouille les surfaces à assembler, puis se solidifie de façon isotherme par diffusion des éléments d'addition du métal d'apport dans le matériau des pièces, dont la composition change et s'homogénéise avec celle du cordon de brasage ainsi formé. Au stade final du brasage-diffusion, le métal d'apport fait corps et est indiscernable du matériau des pièces.

Un tel procédé permet d'effectuer, comme indiqué ci-dessus, l'assemblage de plusieurs pièces tout en conférant aux pièces assemblées et à leurs liaisons des caractéristiques mécaniques et métallurgiques comparables à celles des pièces d'origine. Les températures mises en oeuvre lors d'un tel procédé sont en outre compatibles avec les superalliages classiquement utilisés pour la réalisation de ces pièces, notamment dans le domaine aéronautique.

La réparation d'une pièce à l'aide d'une préforme sensiblement plane limite toutefois les applications de ce procédé. Ainsi, FR 2 978 070 propose, dans le cas, par exemple des aubes de turbine, où la zone à réparer peut présenter un profil en trois dimensions, avec une quantité de matière à ajouter qui peut ne pas être constante sur toute la zone (épaisseur variable notamment) :
- de réaliser, couche par couche, une préforme par fusion sélective (dite aussi DMLS - Direct Métal Laser Sintering - ou frittage de poudre métal), d'une poudre contenant un matériau de base identique ou semblable à celui de la pièce, la préforme comportant (au moins) une surface d'assemblage destinée à être brasée à la pièce de la turbomachine à réparer et contenant pour cela un matériau de brasage mélangé au matériau de base, ladite poudre contenant le mélange ayant, lors d'un chauffage jusqu'à fusion générateur de flux de chaleur, un pic principal de transformation du matériau de brasage, de plus grande amplitude du flux de chaleur, et des pics secondaires de transformation du matériau de brasage, de moindres amplitudes de flux de chaleur,
- et d'assembler la préforme à la pièce de la turbomachine par brasage-diffusion.

Mais de telles pièces où la zone à réparer peut donc présenter un profil en trois dimensions, avec une quantité de matière à ajouter qui peut ne pas être constante sur toute la zone, ne sont pas réalisables avec la qualité attendue. Lors de la fabrication directe (réalisation, couche par couche, de la préforme par fusion sélective), le matériau fondu s'avère pouvoir se fissurer fortement au refroidissement, altérant ainsi la fabrication.

Un objectif de l'invention est d'éviter ces situations. Pour cela, le présent document propose un procédé de réparation d'une pièce de turbomachine, comportant les étapes consistant à :
- réaliser, couche par couche, une préforme par fusion sélective d'une poudre contenant un matériau de base identique ou semblable à celui de la pièce, la préforme comportant une surface d'assemblage destinée à être brasée sur la pièce à réparer et contenant pour cela un matériau de brasage mélangé au matériau de base, le matériau de brasage étant un alliage à base de nickel, consistant en : cobalt de 18 à 22 %, silicium de 4 à 5%, bore de 2,7 à 3,15%, carbone de 0 à 0,06%, chrome de 9 à 19%, reste nickel, le tout en pourcentage pondéral, le chrome limitant la fissuration des pièces lors de leur refroidissement, ladite poudre contenant le mélange ayant, lors d'un chauffage jusqu'à fusion générateur de flux de chaleur, un pic principal de transformation du matériau de brasage, de plus grande amplitude du flux de chaleur, et des pics secondaires de transformation du matériau de brasage, de moindres amplitudes de flux de chaleur, le pic principal et les pics secondaires du matériau de brasage étant mesurés à l'aide d'un appareil d'analyse thermique différentielle en comparaison d'une mesure étalon réalisée avec un creuset vide, sur l'intervalle de température d'un traitement thermique entre 900°C et 1300°C, tel que l'amplitude mesurée du flux de chaleur dudit pic principal de transformation du matériau de brasage utilisé pour réaliser la préforme est au moins le double des amplitudes respectives mesurées des flux de chaleur des pics secondaires de transformation de ce matériau de brasage,
- assembler la préforme à la pièce de la turbomachine par brasage-diffusion.

Ainsi, il a été imaginé de contrôler le retrait de la matière. Plus précisément, il a été imaginé que la brasure ne présente plus qu'un seul pic principal de transformation durant la chauffe (et/ou le refroidissement). Encore plus précisément, il est proposé que l'amplitude flux de chaleur du pic principal de transformation du matériau de brasage utilisé pour réaliser la préforme soit au moins le double (à 20% près) des amplitudes respectives des flux de chaleur des pics secondaires de transformation de ce matériau de brasage, comme illustré dans les figures annexées.

Après mélange des poudres de brasure et de superalliage (y compris dans le cas de poudres pré-alliées, c'est-à-dire mélangées ensemble antérieurement), non seulement ce composé comportera deux pics principaux de transformation (un pour la fusion de la brasure, le second pour la fusion du superalliage), mais les pics secondaires de transformation pour la fusion de la brasure seront de beaucoup plus petites ampleurs que le pic principal.

Le procédé selon l'invention peut être appliqué à la réparation des aubes de turbine.

La préforme pourra être réalisée avec une rugosité contrôlée : la préforme est plus facilement brasable quand elle présente une certaine rugosité, puisque la brasure peut alors mouiller plus efficacement les surfaces à assembler.

Le matériau de base est identique ou semblable à celui de la pièce à réparer, de manière à favoriser l'assemblage de la préforme par brasage-diffusion. Deux matériaux "semblables" possèdent au moins la même base (par exemple : nickel, cobalt, titane,...).

Une application de l'invention concerne la réalisation par métallurgie des poudres de pièces de forme destinées à être assemblées par auto-brasage à des pièces métalliques susceptibles de les recevoir et dites réceptrices. L'auto-brasage est le brasage autogène de la pièce de forme sur la pièce métallique réceptrice, les éléments assurant le brasage étant contenus dans la pièce de forme (qui sera donc favorablement en trois dimensions).

L'auto-brasage de cette pièce de forme sur la pièce métallique peut comprendre ou être suivie d'un traitement thermique de diffusion à l'état solide, en constituant ainsi ce qui est appelé communément une opération de brasage/diffusion, traitement destiné à homogénéiser la composition et la structure des pièces de forme et de la (zone de) liaison par auto-brasage.

Notamment dans ce cadre, il est conseillé que la composition chimique du matériau de base précité (utilisé pour réaliser la préforme par fusion sélective) corresponde à un superalliage à base de Ni, de Co, de Ti ou de Fe et en ce que celle du matériau de brasage corresponde à un alliage à base de Ni, et/ou de Co, et/ou de Fe dans lequel l'élément fondant est du Si et/ou du B (comme connu en soi, un élément fondant, tel par exemple le silicium ou le bore, est un élément qui abaisse sensiblement la température de fusion (solidus) de l'alliage dans lequel il est introduit).

Quant au composé à apporter au matériau de brasage afin que ladite amplitude du flux de chaleur du pic principal de transformation du matériau de brasage soit donc égale au moins au double des amplitudes respectives des flux de chaleur des pics secondaires de transformation de ce matériau de brasage, on recommande qu'il soit choisi parmi du Cr, du Co, du Mo, du Fe. On conseille un pourcentage pondéral de ce composé entre 7 et 23%.

Ces choix sont particulièrement appropriés à la réalisation de pièces de turbine, et notamment d'aubes de turbine.

Selon l'invention, en pourcentages pondéraux, le matériau de brasage est un alliage à base de Ni, avec du Co, Si, B et du Cr entre 9 et 19% (étant précisé que tous les pourcentages sont, dans la présente description, fournies en pourcentage pondéral).

En utilisant la poudre de brasage dite NiCoSiB 1060, à base de Ni et Co 20, Si 4,5, B 3, on obtiendra un résultat d'équilibre entre faible risque de fissuration, tenue à la corrosion à chaud et qualités finale du couple matériau de base / matériau de brasage, notamment vis-à-vis de la résistance au fluage à haute température.

Avantageusement, la quantité de chrome dans le matériau de brasage est de 14%. Cette quantité particulière offre un bon compromis entre limitation de la fissuration et résistance des pièces.

En effet, un ajout de chrome trop faible, c'est-à-dire inférieur à 9%, ne permettrait pas de limiter convenablement l'apparition de fissurations sur la pièce alors qu'une quantité trop importante, c'est-à-dire supérieure à 19%, aurait pour effet d'augmenter la température de fusion du matériau de brasage en la rapprochant trop de la température de fusion du matériau de base, ce qui entrainerait une fragilisation de la pièce.

Selon une autre caractéristique de l'invention, la préforme est réalisée par fusion sélective d'une poudre du matériau de base et d'une poudre de brasage, dont la température de fusion sera inférieure à la température de fusion de la poudre de base. Les tolérances dimensionnelles de la préforme seront ainsi très réduites et l'assemblage final optimisé.

La préforme qui contient déjà un matériau de brasage pourra être brasée directement sur la pièce à réparer, en fonction de la quantité de matériau de brasage.

De préférence, la préforme contiendra au moins 60% de matériau de base, de manière à conférer des caractéristiques mécaniques suffisantes à a la préforme.

Dans une variante de l'invention, la préforme est réalisée par fusion sélective d'une poudre contenant uniquement le matériau de base.

Un dépôt de matériau de brasage peut alors être effectué sur la surface d'assemblage de la préforme.

Ce dépôt est par exemple réalisé par projection laser ou par projection plasma d'une poudre de brasage, ou par co-déposition (électrodéposition) dans un milieu aqueux.

L'épaisseur d'un tel dépôt sera par exemple comprise entre 20 et 200 µm.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1, 2 et 3 sont des vues en perspective d'une préforme utilisée pour la réparation d'une aube de turbomachine,
- la figure 4 est une vue schématique d'une installation de fusion sélective de poudre,
- les figures 5 à 7 sont des vues schématiques illustrant différentes étapes du procédé de réparation selon l'invention,
- la figure 8 est une vue schématique d'une installation de projection laser,
- la figure 9 est une vue schématique d'une installation de projection plasma,
- la figure 10 montre, sur un graphe, une situation où existe un risque important de fissuration du matériau fondu dans le cas de l'utilisation d'une composition connue, conformément à une solution de l'art antérieur,
- la figure 11 montre, sur un graphe comparable, une solution visant à pallier ce risque, conformément à ce que propose l'invention,
- la figure 12 compare, sur un graphe comparable à ceux qui précédent, mais au refroidissement, les pics de transformation liés à la brasure, sans ajout de Cr dans le cas d'espèce (courbes du bas, N°1 à 3), et avec ajout (courbes du haut),
- la figure 13 montre un graphe semblable à celui de la figure 10 sur lequel trois courbes lissées, superposées à la courbe de la figure 10, schématisent différentes configuration du matériau de brasage comprenant une teneur en chrome de 9%, 14% ou 19%,
- la figure 14 montre un exemple de fissure lorsque le matériau de brasage ne comprend pas de chrome,
- la figure 15 est une vue schématique montrant le comportement du matériau de base lorsque le matériau de brasage comprend un pourcentage de chrome inférieur à 19%, et
- la figure 16 est une vue schématique montrant le comportement du matériau de base lorsque le matériau de brasage comprend un pourcentage de chrome supérieur à 19%.

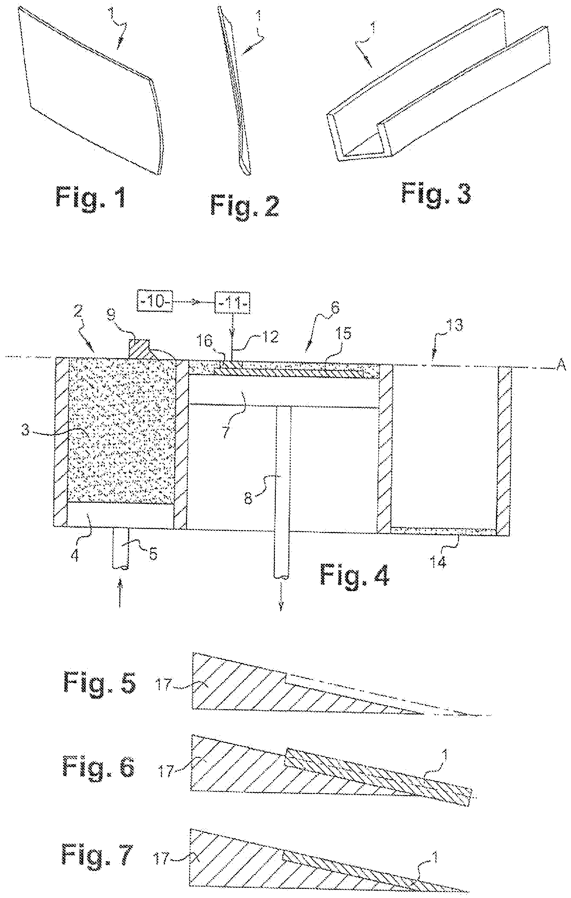

Les figures 1 et 2 représentent une préforme 1 utilisée dans un procédé de réparation d'un bord d'attaque ou d'un bord de fuite d'une aube de turbine, dans une turbomachine telle qu'un turboréacteur ou un turbopropulseur d'avion. La figure 3 représente une préforme 1 utilisée dans un procédé de réparation d'une plate-forme d'une aube de ce type. Dans les deux cas, les préformes 1 ont des formes tridimensionnelles complexes.

Dans un premier mode de réalisation, le procédé de réparation selon l'invention consiste tout d'abord à réaliser, couche par couche, une préforme 1 frittée par fusion sélective d'un mélange de poudres comportant une poudre d'un matériau de base et une poudre d'un matériau de brasage, ces matériaux ayant été pré-mélangés ou non.

La température de fusion du matériau de brasage est inférieure à celle du matériau de base. A titre d'exemple, la température de fusion du matériau de brasage sera comprise entre 1000 et 1300°C alors que la température de fusion du matériau de base sera comprise entre 1200 et 1600°C.

Le matériau de base est préférentiellement un superalliage, par exemple un superalliage à base de nickel. Le matériau de brasage est dans ce cas également à base de nickel, et comporte en outre des éléments fondants, tels donc que du silicium et/ou du bore.

La fusion sélective est réalisée à l'aide d'une installation telle que celle représentée à la figure 4. Cette installation comporte un réservoir 2 contenant le mélange de poudres métalliques 3 et dont le fond 4 est mobile et déplaçable en translation par une tige 5 d'un vérin, et une cuve voisine 6 dont le fond est constitué par un plateau mobile 7, également déplaçable en translation par une tige 8 d'un vérin.

L'installation comporte en outre un racleur 9 permettant d'amener de la poudre du réservoir 2 vers la cuve 6, par déplacement le long d'un plan horizontal A, et des moyens 10 de génération d'un faisceau laser ou d'un faisceau d'électrons, couplés à un dispositif 11 commandé par ordinateur pour orienter et déplacer le faisceau 12. Un bac de réception 13 de la poudre excédentaire 14, adjacent à la cuve 6, peut également être prévu.

Le fonctionnement de cette installation est le suivant : Tout d'abord, le fond 4 du réservoir 3 est déplacé vers le haut de manière à ce qu'une certaine quantité de poudre 3 soit située au-dessus du plan horizontal A. Le racleur 9 est déplacé de la gauche vers la droite, de manière à racler ladite couche de poudre 3 dans le réservoir 6 et déposer une couche mince de poudre métallique sur la surface plane horizontale du plateau 7. La quantité de poudre et la position du plateau 7 sont déterminées de façon à former une couche de poudre d'une épaisseur choisie et constante. Un faisceau laser 12 ou un faisceau d'électrons, perpendiculaire au plan A, balaye ensuite une zone déterminée de la couche formée dans la cuve, de manière à fondre localement la poudre de brasage (et non la poudre de base). Les zones fondues se solidifient ensuite, en agglomérant les grains de la poudre de base et en formant une première couche 15 d'une préforme frittée 1, cette couche 15 ayant par exemple une épaisseur de l'ordre de 10 à 150 µm.

Plus particulièrement, l'épaisseur de la couche 15 est comprise entre 10 et 45 µm, respectivement entre 45 et 150 µm, lorsque la poudre est fondue à l'aide d'un faisceau laser ou respectivement à l'aide d'un faisceau d'électrons.

Le plateau 7 est alors descendu puis une seconde couche de poudre est amenée, de la même manière que précédemment, sur la première couche de poudre. Par déplacement contrôlé du faisceau, une seconde couche 16 est formée par frittage sur la première couche 15.

Ces opérations sont répétées jusqu'à la formation complète de la préforme 1. Les couches 15, 16 présentent sensiblement la même épaisseur.

Dans le cas où la préforme 1 est construite couche par couche par fusion sélective de la poudre à l'aide d'un faisceau laser, la poudre présente une taille de grain moyenne comprise entre 10 et 45 µm. Les répartitions granulométriques des deux poudres ne sont pas forcément identiques. On privilégie des moyennes proches, c'est-à-dire le cas où les deux poudres ont chacune une granulométrie moyenne comprise entre 10 et 45 µm, afin de faciliter le mélange des poudres.

Dans le cas où la préforme 1 est construite couche par couche par fusion sélective de la poudre à l'aide d'un faisceau d'électrons, la poudre présente une taille de grain moyenne comprise entre 50 et 100 µm.

Cette préforme 1, qui contient une quantité de matériau de brasage suffisante, peut être brasée directement sur la pièce à réparer 17 (figure 5).

Pour cela, les surfaces à braser de la préforme 1 et de la pièce à réparer 17 sont dégraissées et/ou décapées, puis la préforme 1 est placée sur la surface de la pièce à réparer (figure 6).

La préforme 1 est alors pointée (pointage laser, décharge de condensateur...) à la pièce à réparer, pour la maintenir en position sur la pièce à réparer 17.

La préforme 1 et la pièce à réparer 17 sont ensuite placées dans un four où elles subiront un cycle de brasage-diffusion.

Pour un matériau de base de type NK17CDAT, également connu sous la dénomination Astroloy, et pour un matériau de brasure de type NiCrB, le brasage-diffusion peut comprendre une montée en température d'environ 2 heures 30 min à 1205° C, un premier palier de 15 minutes à 1205° C, suivi d'un second palier de 2 heures à 1160° C, puis une baisse de température d'environ 1 heure de 1160° C à 20° C.

Lors du brasage-diffusion, le matériau de brasage fond en premier. La phase liquide à laquelle il donne naissance est retenue par capillarité et mouille les surfaces de la pièce à réparer 17 et de la préforme 1.

Après refroidissement, une couche intermédiaire solide est formée entre la préforme 1 et la pièce à réparer 17, et a une structure métallographique homogène liée par diffusion aux surfaces de ces pièces.

La pièce réparée possède ainsi des caractéristiques mécaniques identiques ou similaires à celles d'une pièce neuve.

La pièce réparée subit enfin une opération de finition lors de laquelle les surfaces réparées sont ajustées ou usinées de manière à ce que la pièce retrouve les dimensions d'une pièce neuve (figure 7).

Afin d'accroître encore les caractéristiques mécaniques de la préforme 1, et donc de la pièce réparée, ladite préforme 1 peut comporter, à coeur, une proportion réduite ou nulle de matériau de brasage, un dépôt de poudre riche en matériau de brasage pouvant ensuite être réalisé sur la surface à braser.

C'est ainsi que la préforme 1 peut être réalisée par fusion sélective d'un mélange de poudre de base et de poudre de brasage dans lequel la proportion en masse de la poudre de base est supérieure à 90%. Il est également possible de réaliser la préforme 1 par fusion sélective d'une poudre de base uniquement.

Dans ce cas, il est nécessaire de former une couche d'une poudre enrichie en matériau de brasage sur la surface de la préforme. Cette couche peut être réalisée par projection laser ou par projection plasma, électrodéposition.

La poudre utilisée pour la formation de cette couche peut comporter 60 à 90 % en masse de poudre de base et 10 à 40% en masse de poudre de brasage.

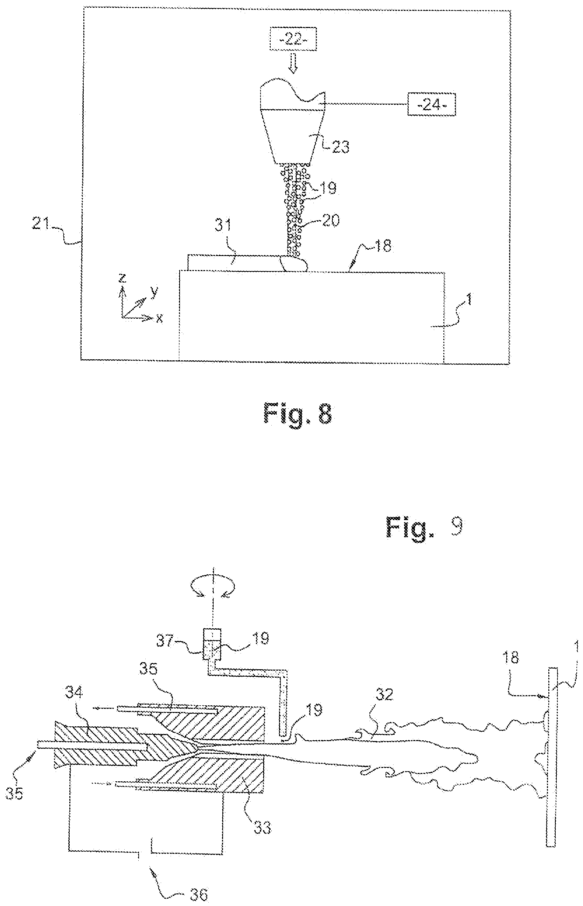

Le principe du dépôt par projection laser est illustré à la figure 8. Ce procédé de dépôt consiste à projeter une poudre 19 contre une surface 18 et à chauffer la poudre projetée à l'aide d'un faisceau laser 20 orienté vers la surface 18, de sorte que ladite poudre 19 fonde puis se solidifie sur ladite surface 18.

Pour cela, la préforme 1 est placée dans une enceinte 21 contenant par exemple de l'argon. Des moyens 22 de génération d'un faisceau laser de type YAG produisent un faisceau laser 20 orienté vers la surface 18 de la préforme 1, au travers d'une buse 23 orientée perpendiculairement à cette surface 18. La buse 23 et le faisceau laser 20 peuvent être déplacés par rapport à la surface (ou inversement), par l'intermédiaire d'une commande et de moyens appropriés 24.

Une ou plusieurs couches successives 31, riches en matériau de brasure, peuvent ainsi être formées sur la surface correspondante 18 de la préforme 1.

Le principe du dépôt par projection plasma est illustré à la figure 9. Ce procédé de dépôt consiste à injecter une poudre 19 dans un dard plasma 32 où elle est fondue et projetée à grande vitesse vers la surface à revêtir 18. Le dard plasma 32 est produit à l'intérieur d'une torche par un arc électrique généré entre deux électrodes 33, 34 refroidies à l'aide d'un circuit de refroidissement 35. La différence de potentiel entre les deux électrodes 33, 34 est créée par un générateur 36.

La fusion des grains de poudre 19 est due aux très hautes températures au sein du plasma, rendant possible le dépôt de matériaux à point de fusion élevé.

En se solidifiant, le matériau de la poudre forme un dépôt à la surface 18 de la préforme 1.

Les grandes vitesses des gaz et des particules permettent d'obtenir une forte adhésion du dépôt, une faible porosité, et un niveau de transformation chimique réduit.

Des exemples traditionnels de composition chimique du matériau de base est donnée ci-dessous. Pour chaque matériau, on donne la référence et la composition chimique correspondante (pourcentage en masse) :
- Astroloy (NK17CDAT) : Base nickel, cobalt : 16,9 %, chrome : 14,8 %, aluminium : 3,87 %, titane : 3,45 %, molybdène : 5,1 %, carbone : 0,015 %.
- SYP3 : Base nickel, cobalt: 17%, chrome: 15 %, molybdène: 5 %, titane : 3,5%, aluminium : 4%.

Il est à noter que l'Astroloy est le matériau donnant les meilleurs résultats lors des essais.

De la même manière, la composition chimique du matériau de brasage est donnée ci-dessous :
- NiCoSiB 1060 = TY 134b
- TY 134b : Base nickel, cobalt : 18 à 22 %, silicium : 4 à 5%, bore : 2,7 à 3,15%, carbone : 0 à 0,06%.

A titre d'exemple également, le mélange de poudres (matériau de base/matériau de brasage) peut comporter 75% en masse de poudre de type SYP3 ou Astroloy (matériau de base) et 25 % en poids de poudre de type TY 134b (matériau de brasage). En variante, ce mélange peut comporter 70% en poids de poudre de matériau de base et 30% en masse de matériau de brasage.

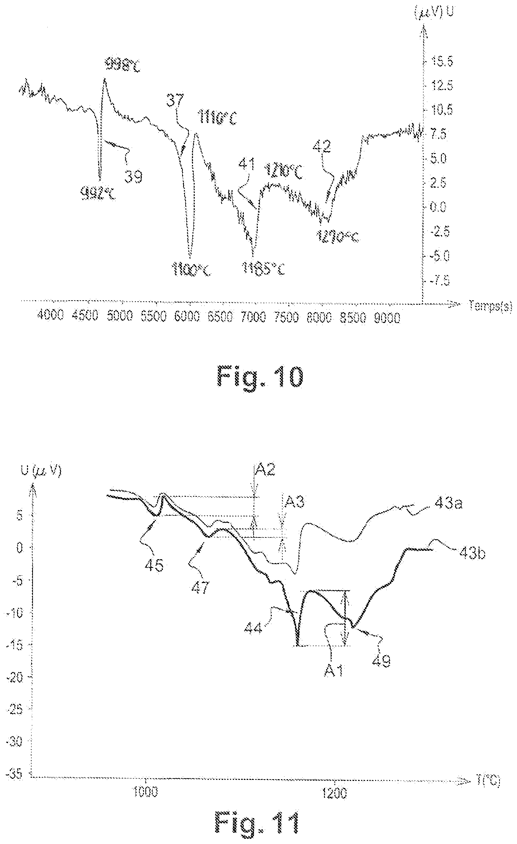

Les figures 10 à 16 correspondent à une situation dans laquelle le matériau de base est l'Astroloy et le matériau de brasage est le TY 134 b, tels que définis ci-dessus.

La figure 10 montre qu'avec une composition de type Astroloy et TY134b mélangés il y a malgré tout un risque important de fissuration du matériau fondu.

En effet, on distingue, sur le graphe d'Analyse Thermique Différentielle illustré du mélange de poudres ci-dessus, montrant l'évolution du flux de chaleur de la pièce, c'est-à-dire de la tension U en fonction du temps, où le mélange atteint plus de 1300°C après plus d'une heure de chauffage:
- un pic principal 37 de transformation du matériau de brasage, de plus grande amplitude thermique,
- et, de part et d'autres deux pics secondaires 39,41 de transformation de ce même matériau de brasage, de moindres amplitudes thermiques que le pic principal, comme on le voit.

Plus tard, dans une gamme de température comparable (entre 900°C et 1140°C), on note la survenance du ou des pics (repéré(s) globalement 42) de transformation du matériau de base, ici donc un superalliage.

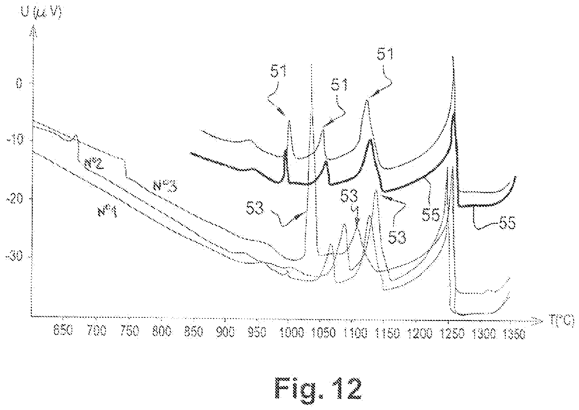

Les valeurs précises de température et temps où ils interviennent sont lisibles sur la figure 10, où les températures - en °C - sont notées directement sur le graphique. L'amplitude des pics (A1/A2/A3 figure 11) est liée aux flux de chaleur (Heat Flows). Le temps affiché en abscisse n'a pas d'intérêt majeur dans notre cas. Pour les figures 11 et 12 on retrouve en ordonnée le flux de chaleur et en abscisse la température.

La mesure du flux de chaleur du matériau concerné peut être obtenue par un capteur « RDF Micro - Foil »®. Il s'agit d'un capteur que l'on connecte à un microvoltmètre (tension U). L'ensemble fournit alors une mesure directe de la vitesse de transfert de chauffage ou de refroidissement à travers à la fois le capteur et la surface de montage. Il existe une relation directe entre la sortie du microvoltmètre et le flux de chaleur. Sur les figures 11-12, les valeurs de tension négatives indiquent qu'il s'agit d'une réaction exothermique, les valeurs portées étant obtenues par différence avec une mesure étalon réalisée avec un creuset vide.

Sur un graphe de cette nature, les deux exemples des courbes 43a et 43b de la figure 11 montrent donc chacun une solution conforme à l'invention visant à permettre de fait d'élaborer une pièce par fabrication directe, selon l'une des techniques présentées ci-avant, mais avec une brasure sur une base connue sous l'appellation "RBD 61" (soit un mélange Astroloy + TY 134b), mais avec du Cr ajouté (ici entre 9 et 19% donc, par exemple à 14%) présentant, par exemple pour la courbe 43b:
- non seulement un seul pic principal 44 de transformation du matériau de brasage utilisé pour réaliser la préforme, durant la chauffe (ceci étant identique au refroidissement),
- mais aussi une amplitude thermique (c'est-à-dire de flux de chaleur) A1 de ce pic principal 44 qui est au moins le double de chacune des amplitudes thermiques, respectivement A2 et A3, des pics secondaires 45,47 de transformation de ce même matériau de brasage.

De nouveau, à plus hautes températures (pour des températures supérieures à 1200°C), on retrouve le ou les pics (repéré(s) globalement 49) de transformation du superalliage de base.

La figure 12 montre en outre qu'au refroidissement les pics 51 de transformation liés à la brasure « dopée » (avec donc le Chrome ajouté dans l'exemple préféré retenu) sont atténués par rapport à ce qu'ils auraient été (voir repères 53, pour la courbe N°3, par exemple) sans ajout de Chrome à l'alliage considéré.

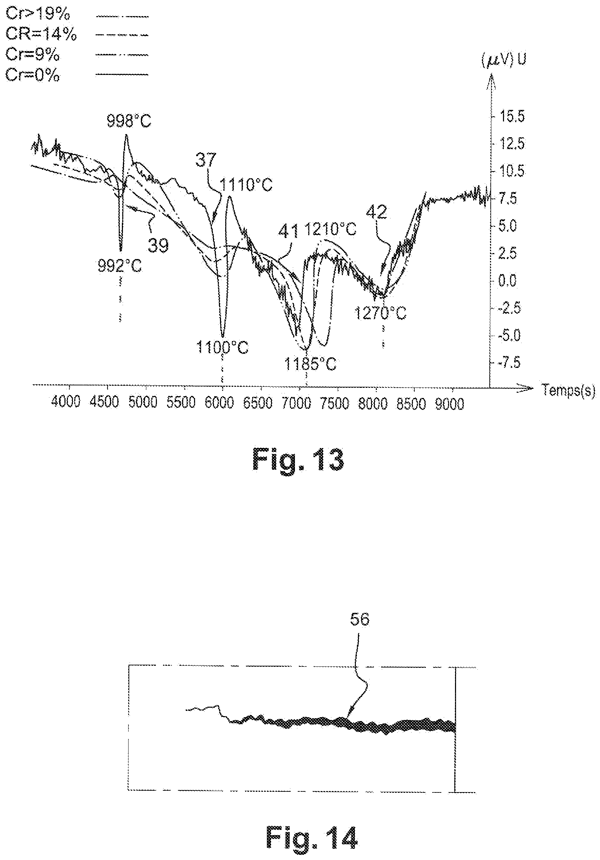

La figure 13 montre le comportement du matériau de la figure 10 avec différentes teneurs en chrome du matériau de brasage. La courbe en traits pleins montre le comportement d'un matériau de brasage dépourvu de chrome. Le résultat, après chauffage d'un tel matériau de brasage est représenté sur la figure 14 qui montre une fissure 56 apparue après refroidissement de la pièce obtenue.

Les trois courbes en traits discontinus (on se réfèrera à la légende de la figure pour identifier chacune) montrent le comportement du mélange entre le matériau de base et celui de brasage quand le matériau de brasage comprend respectivement 9%, 14% et 19% de chrome.

On observe que plus la concentration en chrome est importante moins les amplitudes thermiques des pics de transformation sont prononcées pout des températures inférieures à 1185°C. Ainsi, on aura bien limité le risque de fissuration des pièces.

En 55 a été repérée la courbe d'évolution du matériau de base, c'est-à-dire ici du superalliage retenu.

Pour la clarté du propos, on définira :
- un « pic de transformation » du matériau de brasage (ceci s'appliquant d'ailleurs au matériau de base, ici un superalliage) comme la température (ou gamme de températures) de début de fusion de la brasure (respectivement du matériau de base),
- et « l'amplitude d'un flux de chaleur » (ou amplitude thermique) (Ai), comme la différence entre deux valeurs de flux de chaleur, pour un même échantillon, à deux valeurs de températures très proches l'une de l'autre, moins de 50°C.

Ainsi après mélange des poudres de brasure et de superalliage, ce composé comporte deux pics de transformation (un pour la fusion de la brasure, le second pour la fusion du superalliage). La diminution du nombre de pics de transformation au chauffage ainsi qu'au refroidissement permet de limiter les contraintes vues par la pièce au refroidissement et d'éviter toute fissuration.

Toutefois, on remarque, toujours sur la figure 13, que l'augmentation du pourcentage de chrome a pour incidence l'augmentation de la température de fusion du matériau de brasage. Ainsi, pour la courbe correspondant à l'utilisation d'un matériau de brasage ayant une concentration de 19% de chrome, la différence de température de fusion, par rapport à la température de fusion d'un matériau de brasage dépourvu de chrome, est d'environ 25°C (1210°C-1185°C), ce qui, à partir de 1200°C, est une augmentation importante. On notera également que les courbes correspondant à l'utilisation d'un matériau de brasage ayant une concentration de 9% ou 14 % de chrome ont une température de fusion proche de celle d'un matériau de brasage dépourvu de chrome respectivement comprises entre 1185°C et 1195°C et 1195°C et 1205°C.

L'ajout de chrome dans le matériau de brasage augmente la température de fusion du matériau de brasage, qui se rapproche de la température de fusion du matériau constitutif de la pièce à réparer.

De préférence, le matériau de brasage est déterminé de sorte que sa température de fusion soit au maximum de 1210°C et de préférence inférieure à 1210 °C.

Une quantité de chrome supérieure à 19%, si elle permet de limiter l'apparition de fissuration lors du refroidissement, générera un problème de comportement du matériau constitutif de la pièce. En effet, la température de fusion du matériau de brasage sera alors proche de celle du matériau constitutif de la pièce si bien que, lorsque la pièce sera chauffée, le matériau constitutif de la pièce réagira à la chaleur nécessaire pour la fonte du matériau de brasage.

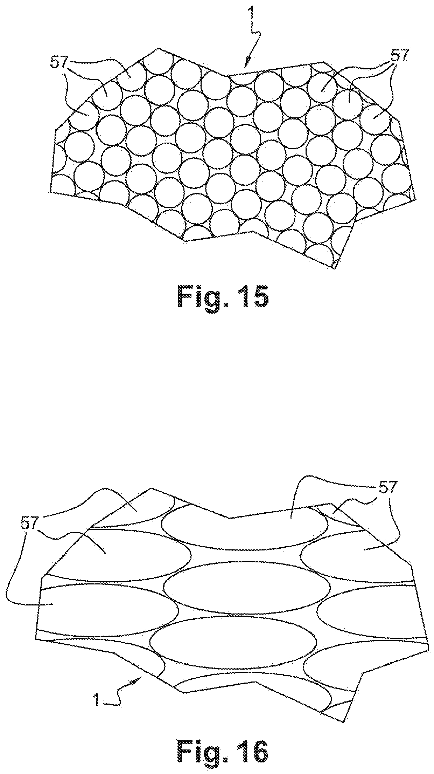

La figure 15 montre, de manière schématique, le comportement du matériau constitutif de la pièce à réparer lorsque le matériau de brasage comprend une quantité de chrome comprise entre 9% et 19%. On peut voir que des grains 57 du matériau constitutif de la pièce 1 à réparer sont répartis de manière quasi-homogène, ce qui permet de conférer à la pièce une bonne résistance mécanique.

Le comportement du matériau constitutif de la pièce à réparer sera comme schématisé sur la figure 16 lorsque le matériau de brasage comprend une quantité de chrome supérieure à 19%. On peut voir un grossissement des grains 57 du matériau constitutif de la pièce 1 à réparer. Ce grossissement génère alors une fragilité de la pièce 1 et une résistance aux contraintes mécaniques nettement inférieure à celle de la pièce 1 de la figure 15.

A titre d'exemple favorable de réalisation, une pièce donnée pourra en particulier être fabriquée en superalliage à base de nickel par le procédé de métallurgie des poudres à l'aide donc d'une poudre A de base et une poudre B de brasage. La poudre A de base pourra être celle connue sous la désignation commerciale Astroloy (NK17CDAT selon désignation AFNOR). Ce matériau est tout à fait compatible avec le superalliage dénommé René 77 utilisée pour la fabrication d'une aube, notamment du point de vue température de solidus et caractéristiques mécaniques.

La température de solidus de la poudre A de base est de 1240°C. Sa température de liquidus est de 1280°C. La poudre de brasage B utilisée pour réaliser le frittage de la poudre d'Astroloy et l'autobrasage avec l'aube est une poudre en alliage Ni-Co-Si-B 1060 contenant en poids 17%Co, 4%Si, 2, 7%B. La température de solidus de la poudre B de brasage est de 965°C. Sa température de liquidus est de 1065°C et est inférieure aux températures de solidus de la poudre A de base et de celui de l'aube. Ces données permettent de définir une température d'autobrasage de 1200°C qui est supérieure à la température de liquidus de la poudre de brasage mais qui est inférieure à la température du solidus de l'aube en René 77 et de celui de la poudre A d'Astroloy.

Ainsi, la température d'auto-brasage sera supérieure à la température du liquidus de la poudre de brasage et inférieure aux températures de solidus de la poudre de base et de la pièce réceptrice (telle la pièce 17 précitée), tandis que le frittage de l'ébauche (telle la préforme 1 précitée) sera intervenue à une température supérieure à la température de liquidus de la poudre de brasage mais inférieure à la température du traitement d'auto-brasage ultérieur. On pourra ainsi obtenir une pièce de forme apte à l'auto-brasage dont la densité relative sera au moins égale à 95 %.

Comme enseigné dans FR 2785559, il est conseillé qu'en pratique, dans l'application prévue aux turbomachines aéronautiques, et en particulier aux éléments de turbines, notamment les aubes et/ou les distributeurs de turbines basse pression, ce qui suit soit respecté, en combinaison ou non, afin d'optimiser la qualité de la fabrication, compte tenu de l'état général de la technique connu :
- le matériau de brasage sera un alliage contenant de 4 à 5 % de Si en poids,
- le matériau de brasage sera un alliage contenant de 2,7 à 3,15% de B en poids,
- le pourcentage pondéral de matériau de brasage dans la poudre contenant le matériau de brasage mélangé au matériau de base sera compris entre 5 et 40%,
- la préforme (1) contient au moins 60% de matériau de base.

Le procédé selon l'invention permet de réparer diverses pièces de turbomachine. En effet, la préforme étant construite couche par couche par fusion sélective de poudre, celle-ci peut présenter une forme en trois dimensions et, si nécessaire, une épaisseur variable.

## Revendications

1. Procédé de réparation d'une pièce de turbomachine (17), comportant les étapes consistant à :
- réaliser, couche par couche, une préforme (1) par fusion sélective d'une poudre (3) contenant un matériau de base identique ou semblable à celui de la pièce (17), la préforme comportant une surface d'assemblage destinée à être brasée sur la pièce (17) à réparer et contenant pour cela un matériau de brasage mélangé au matériau de base, le matériau de brasage étant un alliage à base de nickel, consistant en : cobalt de 18 à 22 %, silicium de 4 à 5%, bore de 2,7 à 3,15%, carbone de 0 à 0,06%, chrome de 9 à 19%, reste nickel, le tout en pourcentage pondéral, le chrome limitant la fissuration des pièces lors de leur refroidissement, ladite poudre contenant le mélange ayant, lors d'un chauffage jusqu'à fusion générateur de flux de chaleur, un pic principal de transformation du matériau de brasage, de plus grande amplitude du flux de chaleur, et des pics secondaires de transformation du matériau de brasage, de moindres amplitudes de flux de chaleur, le pic principal et les pics secondaires du matériau de brasage étant mesurés à l'aide d'un appareil d'analyse thermique différentielle en comparaison d'une mesure étalon réalisée avec un creuset vide, sur l'intervalle de température d'un traitement thermique entre 900°C et 1300°C, tel que l'amplitude mesurée du flux de chaleur dudit pic principal de transformation du matériau de brasage utilisé pour réaliser la préforme est au moins le double des amplitudes respectives mesurées des flux de chaleur des pics secondaires de transformation de ce matériau de brasage,
- assembler la préforme (1) à la pièce (17) de la turbomachine par brasage-diffusion.

2. Procédé de réparation selon la revendication 1, **caractérisé en ce que** la poudre contenant le mélange atteint au moins une température de 1300°C après au moins une heure de chauffage lors du traitement thermique.

3. Procédé selon l'une quelconque des revendications précédentes **caractérisé en ce que** la quantité de chrome comprise dans ledit alliage est égale à 14%, en pourcentage pondéral.

4. Procédé de réparation selon la revendication 1, où la composition chimique du matériau de base correspond à un superalliage à base de Ni, de Co, de Ti ou de Fe et en ce que celle du matériau de brasage à un alliage à base de Ni, et/ou de Co, et/ou de Fe dans lequel l'élément fondant est du Si et/ou du B.

5. Procédé de réparation selon l'une quelconque des revendications 1 à 4, où la préforme (1) est réalisée par fusion sélective d'une poudre du matériau de base et d'une poudre de brasage, dont la température de fusion est inférieure à la température de fusion de la poudre du matériau de base.

6. Procédé selon l'une quelconque des revendications précédentes **caractérisé en ce que** la température de fusion du matériau de brasage est au plus égale à 1210°C.

7. Procédé selon l'une quelconque des revendications précédentes **caractérisé en ce que** le matériau de base est de Astroloy (également connu sous le nom NK17CDAT) ayant pour composition chimique une base de nickel, du cobalt à 16,9 %, du chrome à 14,8 %, de l'aluminium à 3,87 %, du titane à 3,45 %, du molybdène à 5,1 % et du carbone à 0,015 %, le tout en pourcentage pondéral.

## Patentansprüche

1. Verfahren zum Reparieren eines Teils (17) einer Turbomaschine, umfassend die nachstehenden Schritte:
- schichtweises Ausbilden einer Vorform (1) durch selektives Schmelzen eines Pulvers (3), das ein Grundmaterial enthält, das mit dem des Teils (17) identisch oder diesem ähnlich ist, wobei die Vorform eine Montagefläche aufweist, die dazu bestimmt ist, mit dem zu reparierenden Teil (17) verlötet zu werden, und dazu ein mit dem Grundmaterial vermischtes Lötmaterial enthält, wobei das Lötmaterial eine Legierung auf Nickelbasis ist, bestehend aus 18 bis 22 % Kobalt, 4 bis 5 % Silizium, 2,7 bis 3,15 % Bor, 0 bis 0,06 % Kohlenstoff, 9 bis 19 % Chrom, Rest Nickel, jeweils in Gewichtsprozent, wobei das Chrom die Rissbildung der Teile während ihres Abkühlens begrenzt, wobei das Pulver, das das Gemisch enthält, beim Erhitzen bis zum wärmeflusserzeugenden Schmelzen einen Hauptspitzenwert der Lötmaterialumwandlung mit größerer Wärmeflussamplitude und Nebenspitzenwerte der Lötmaterialumwandlung mit geringeren Wärmeflussamplituden hat, wobei der Hauptspitzenwert und die Nebenspitzenwerte des Lötmaterials mit Hilfe eines Differenz-Thermoanalysegeräts im Vergleich zu einer Standardmessung mit leerem Tiegel über den Temperaturbereich einer Wärmebehandlung zwischen 900 °C und 1300 °C gemessen werden, so dass die gemessene Amplitude des Wärmeflusses des Hauptspitzenwerts der Lötmaterialumwandlung des zum Herstellen der Vorform verwendeten Lötmaterials zumindest das Doppelte der jeweils gemessenen Amplituden der Wärmeflüsse der Nebenspitzenwerte der Umwandlung dieses Lötmaterials beträgt,
- Montieren der Vorform (1) an das Teil (17) der Turbomaschine durch Diffusionslöten.

2. Verfahren zum Reparieren nach Anspruch 1, **dadurch gekennzeichnet, dass** das Pulver, welches das Gemisch enthält, zumindest eine Temperatur von 1300 °C nach zumindest einer Stunde Erhitzen bei der Wärmebehandlung erreicht.

3. Verfahren nach einem der vorangehenden Ansprüche, **dadurch gekennzeichnet, dass** die in der Legierung enthaltende Chrommenge in Gewichtsprozent gleich 14 % ist.

4. Verfahren zum Reparieren nach Anspruch 1, wobei die chemische Zusammensetzung des Grundmaterials einer Superlegierung auf Basis von Ni, Co, Ti oder Fe entspricht, und dass die des Lötmaterials einer Legierung auf Basis von Ni und/oder Co und/oder Fe entspricht, wobei das schmelzende Element Si und/oder B ist.

5. Verfahren zum Reparieren nach einem der Ansprüche 1 bis 4, wobei die Vorform (1) durch selektives Schmelzen eines Pulvers des Grundmaterials und eines Lötpulvers hergestellt wird, dessen Schmelztemperatur geringer als die Schmelztemperatur des Pulvers des Grundmaterials ist.

6. Verfahren nach einem der vorangehenden Ansprüche, **dadurch gekennzeichnet, dass** die Schmelztemperatur des Lötmaterials höchstens gleich 1210 °C ist.

7. Verfahren nach einem der vorangehenden Ansprüche, **dadurch gekennzeichnet, dass** das Grundmaterial Astroloy (auch unter der Bezeichnung NK17CDAT bekannt) ist, das als chemische Zusammensetzung eine Basis aus Nickel, 16,9 % Kobalt, 14,8 % Chrom, 3,87 % Aluminium, 3,45 % Titan, 5,1 % Molybdän und 0,015 % Kohlenstoff, jeweils in Gewichtsprozent, hat.

## Claims

1. A method for repairing a turbine engine part (17), **characterized in that** it comprises the steps of:
- producing a preform (1), layer by layer, by selectively melting a powder (3) containing a base material identical or similar to that of the part (17), the preform having an assembly surface intended to be brazed to the part (17) to be repaired and containing for this purpose a brazing material mixed with the base material, the brazing material being an alloy based on nickel, including: cobalt from 18 to 22%, silicon from 4 to 5%, boron from 2.7 to 3.15%, carbon from 0 to 0.06%, chromium from 9% to 19%, and the rest being nickel, all in percent by weight, chromium limiting the cracking of the parts when they are cooled, said powder containing the mixture, upon heating to fusion generating heat fluxes, having a main transformation peak of the brazing material, with the greatest amplitude of heat flux, and secondary transformation peaks of the brazing material, with a lesser amplitude of heat flux, the main transformation peak and the secondary transformation peaks of the brazing material being measured with a Differential Thermal Analysis apparatus by comparison with a standard measurement performed using an empty crucible on the temperature range of a heat treatment between 900°C and 1300°C, so that the measured amplitude of the heat flux of said main transformation peak of the brazing material used to make the preform is at least twice the measured amplitudes of the respective heat fluxes of the secondary transformation peaks of the brazing material;
- assembling the preform (1) to the turbine engine part (17) by diffusion brazing.

2. The method of claim 1, **characterized in that** the said powder containing the mixture reaches at least 1,300 °C after at least 1 hour of heating during the heat treatment.

3. The method of any of the previous claims, **characterized in that** the quantity of chromium comprised in the said alloy is equal to 14% in percent by weight.

4. The method of claim 1, wherein the chemical composition of the base material corresponds to a Ni, Co, Ti, or Fe-based superalloy and the chemical composition of the brazing material corresponds to a Ni and/or Co and/or Fe-based alloy, in which the melting element is Si and/or B.

5. The method of any of the claims 1 to 4, wherein the preform (1) is produced by selectively melting a base material powder and a brazing powder, the melting temperature of which is less than the melting temperature of the base material powder.

6. The method of any of the previous claims **characterized in that** the melting temperature of the brazing material is at most equal to 1210 °C.

7. The method of any of the previous claims **characterized in that** the base material is Astroloy (also known as NK17CDAT) having a chemical composition of nickel base with 16.9% cobalt, 14.8% chromium, 3.87% aluminium, 3.45% titanium, 5.1% molybdenum, and 0.015% carbon, all in percent by weight.
